# EUROPEAN PATENT SPECIFICATION

(11) **EP 3 035 652 B1**
(45) Date of publication and mention of the grant of the patent: **08.07.2020**
(21) Application number: 14836397.1
(22) Date of filing: 16.04.2014
(51) Int. Cl.: H04W 12/06, G06F 21/45, H04L 29/06, H04M 1/247, H04M 1/725, H04L 29/08

(54) **PROCESSING METHOD AND SYSTEM FOR AUTOMATIC LOGIN BASED ON MOBILE TERMINAL**
VERARBEITUNGSVERFAHREN UND SYSTEM ZUM AUTOMATISCHEN EINLOGGEN AUF BASIS EINES MOBILEN ENDGERÄTS
PROCÉDÉ ET SYSTÈME DE TRAITEMENT POUR UNE CONNEXION AUTOMATIQUE SUR UN TERMINAL MOBILE

(30) Priority: 14.08.2013 CN 201310352890
(43) Date of publication of application: 22.06.2016
(73) Proprietor: Huizhou TCL Mobile Communication Co., Ltd., Hui Zhou Guangdong 516006 (CN)
(72) Inventor: GUO, Hanlin, Huizhou Guangdong 516006 (CN)
(74) Representative: Brachmann, Roland W.
(86) International application number: PCT/CN2014/075514
(87) International publication number: WO 2015/021786

(56) References cited:
- CN-A- 101 677 442
- CN-A- 101 815 291
- CN-A- 102 999 733
- CN-A- 103 036 899
- CN-A- 103 414 824
- US-A1- 2002 186 249
- US-A1- 2003 016 241
- BEOMSOO PARK ET AL: "One Touch Logon: Replacing Multiple Passwords with Single Fingerprint Recognition", COMPUTER AND INFORMATION TECHNOLOGY, 2006. CIT '06. THE SIXTH IEE E INTERNATIONAL CONFERENCE ON, IEEE, PI, 1 September 2006 (2006-09-01), pages 163-163, XP031021741, ISBN: 978-0-7695-2687-4

## Description

The present invention relates to the field of mobile terminals, and in particular relates to a mobile terminal-based automatic logon processing method and system.

Intelligent mobile terminals, in particular smart phones, have been able to gradually replace personal computers and laptop computers for most of their functions. As a result, people are now using mobile terminals, such as smart phones, more when going online, and moreover, many applications on PCs can be used on smart phones. Many cell phone applications involve logon of personal accounts, and many Internet web pages also require logon of user accounts. However, cell phones naturally don't have a convenient and quick keyboard for input as computers do.

In current browsers and various applications on cell phones, moreover, almost all actions related to logon have functions to remember passwords, which are all nevertheless very limited. For example, the browser cache will automatically remember user name and password, but only for the user information of the last logon. Once a user needs to exit and log on again by switching to another user name, it is necessary to exit and log on again to the application. Another drawback is that if a cache stores user account information, there is a risk of leakage, as the cached information is not encrypted.

The document "One Touch Logon: Replacing Multiple Passwords with Single Fingerprint Recognition", Park et al, 6th International IEEE Conference on Computer and Information Technology, CIT '06, 2006, pages 163-168 discloses a personal password management system, which replaces password-based authentication systems with a touch-and-login method. CN 102 999 733 A discloses a method and a device for protecting website logon information in a browser. The method is capable of protecting the user logon information in the browser conveniently and safely, and is capable of ensuring that a user can log on the website rapidly while the website logon information desired to be protected by the user is protected, thereby preventing the private information leakage. US 2002/186249 A discloses a method and system of adding functionality to an Internet browser interface that facilitates automatic login to a web site using an Internet browser.

Therefore, the prior art still needs to be improved and developed.

The technical problem that the present invention intends to solve is, in light of the above drawbacks of the prior art, to provide a mobile terminal-based automatic logon processing method and system. With the logon method and system according to the present invention, a user can automatically log on a target web page and a target application without inputting a user name and password, and the security of a user password can be ensured, which makes it convenient for the user.

This problem is solved according to the features of the independent claims. Further embodiments result from the depending claims.

The mobile terminal-based automatic logon processing method and system according to the present invention to install a password safe application on a mobile terminal, and establish a corresponding relation between a tag and a user name and password, as well as a corresponding relation between the tag and a web page or application through a logon list therein. As a result, when a user needs to log on a web page or application, the user just needs to select a tag corresponding to said target web page or said target application according to said logon list, and does not need to input a user name or password during the process of automatic logon, which greatly saves the time the user uses for logon, avoids inconvenience in using a mobile terminal to input user name and password, and results in convenience for the user.

The aforementioned characteristics, features and advantages of the invention as well as the way they are achieved will be further illustrated in connection with the following examples and considerations as discussed in view of the figures.
- Fig.1: is a flow chart of steps in a preferred embodiment of a mobile terminalbased automatic logon processing method according to the present invention;
- Fig.2: is a flow chart of specific steps of Step S5 in Fig.1;
- Fig.3: is a flow chart of specific steps of Step S8 in Fig.1;
- Fig.4: is a functional block diagram of a preferred embodiment of a mobile terminal-based automatic logon system according to the present invention.

To make the object, technical solution and effect of the present invention clearer and more specific, the present invention will be further described in detail below with reference to the accompanying drawings and embodiments. It should be understood that the specific embodiments herein are only used to describe the present invention, rather than to limit the present invention.

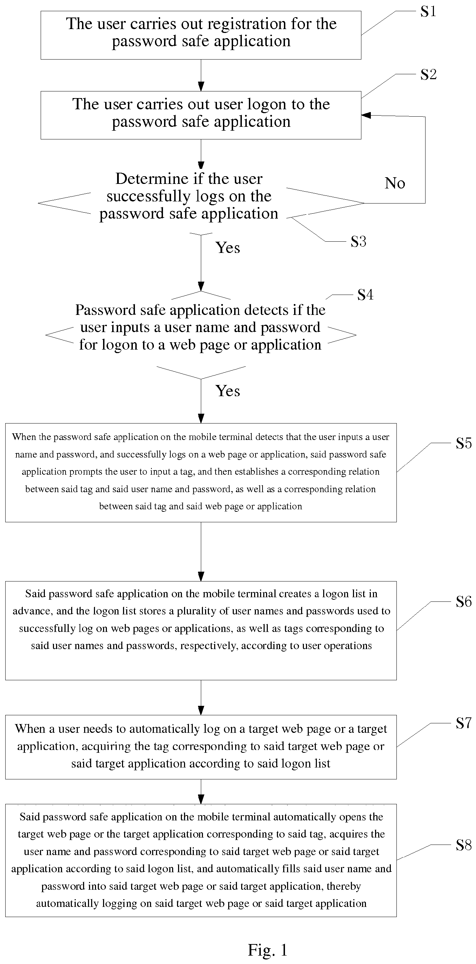

Please refer to Fig.1, and Fig.1 is a flow chart of steps in a preferred embodiment of a mobile terminal-based automatic logon processing method according to the present invention.

First, a user needs to install a password safe application on a mobile terminal, and store user names and passwords used by the user to successfully log on a web page or application with said application, when the user needs to acquire a logon password, the user needs to input a verification code, only when the verification code inputted by the user is correct can the user acquire the user name and password corresponding to the web page or application, thereby ensuring the safety of the password and avoiding potential safety hazard of password leakage.

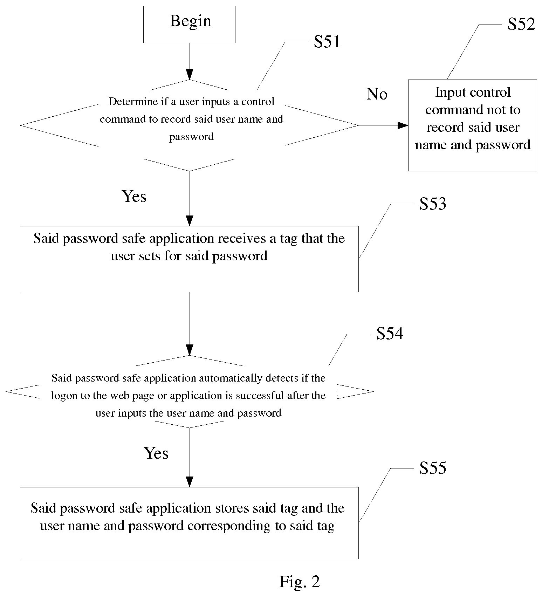

The hardware configuration of the mobile terminal may certainly be changed such that the mobile terminal can automatically implement the method for automatically logging on a web page or application according to the present invention without relying on other applications;
When the user completes the installation of the password safe application on the mobile terminal, first go to Step S1. The user carries out registration for the password safe application;
Namely, during the first time use of said password safe application, the user needs to carry out registration, fill in registration information, and input a verification code;
Step S2. The user carries out user logon to the password safe application;
Namely, when the user registration is completed, to use said password safe application, logon is necessary, and for each logon, a verification code needs to be inputted, and when the user inputs said verification code, go to Step S3. Determine if the user successfully logs on the password safe application;
Namely, said password safe application determines if the verification code inputted by the user during registration is consistent with the verification code inputted thereby during logon; if consistent, determine that the user logon is successful;
If not consistent, determine that the user logon fails, and return to Step S2, where the user inputs a verification code again;
When the user logon is successful, go to Step S4. Said password safe application detects if the user inputs a user name and password for logon to a web page or application;
Namely, when the user logon is successful, said password safe application enters a detection mode, which detects if the user triggers an action having input box properties for user name and password;
When it is detected that the user inputs a user name and password, go to Step S5. When the password safe application on the mobile terminal detects that the user inputs a user name and password, and successfully logs on a web page or application, the password safe application prompts the user to input a tag, and then establishes a corresponding relation between said tag and said user name and password, as well as a corresponding relation between said tag and said web page or application;
Wherein Fig.2 shows the specific flow of Step S5:
First go to Step S51. When the password safe application detects that the user inputs a user name and password to log on a web page or application, determine if the user inputs a control command to record said user name and password;
Namely, when the password safe application detects that the user logs on a web page or application, automatically display a dialog box, through which the user selects whether to store the user name and password inputted when logging on the web page or application;
When the user selects to store, then the control command to record said user name and password is inputted, and consequently go to Step S53; when the user selects not to store, then go to Step S52. A control command not to record said user name and password is inputted;
Step S53. Said password safe application receives a tag that the user sets for said password;
Namely, the user may set said tag according to the user's own use habit, easiness to remember, and other factors, said password safe application may certainly generate a tag automatically for the user to select, and then establish an one-to-one corresponding relation among tag - user name - password - web page or application;
Step S54. Said password safe application automatically detects if the logon to the web page or application is successful after the user inputs the user name and password;
when the logon fails, i.e. when the user inputs an incorrect user name and password, return to Step S4, and said password safe application continues to detect;
when the logon is successful, i.e. when the user inputs the correct user name and password, go to Step S55. Said password safe application stores said tag and the user name and password corresponding to said tag.

By establishing said tag, it enables said mobile terminal to achieve accurate positioning during subsequent quick logon.

Continue to refer to Fig.1; go to Step S6. Said password safe application on the mobile terminal creates a logon list in advance, and the logon list stores a plurality of user names and passwords used to successfully log on web pages or applications, as well as tags corresponding to said user names and passwords, respectively, according to user operations;
Namely, the logon list uses said tags as indexes to correspondingly store said user names and passwords;
Step S7. When a user needs to automatically log on a target web page or a target application, acquiring the tag corresponding to said target web page or said target application according to said logon list;
Wherein the specific implementation flow of Step S7 is:
Step S71. When the user needs to automatically log on a target web page or a target application, the user needs to log on said password safe application;
See Step S2 for the specific logon mode thereof;
Step S72. When the user successfully logs on said password safe application, the user may acquire said logon list;
Step S73. The user may acquire and select the tag corresponding to said target web page or said target application according to said logon list.

Subsequently go to Step S8. Said password safe application on the mobile terminal automatically opens the target web page or the target application corresponding to said tag, acquires the user name and password corresponding to said target web page or said target application according to said logon list, and automatically fills said user name and password into said target web page or said target application, thereby automatically logging on said target web page or said target application.

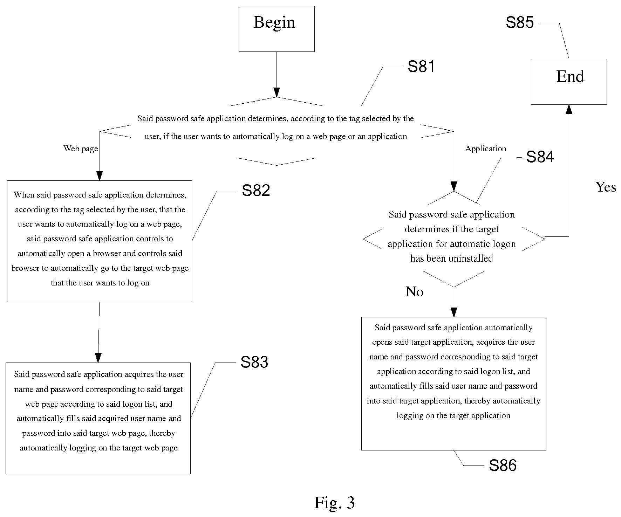

Wherein Fig.3 shows the specific flow of Step S8:
According to Fig.3, first go to Step S81. Said password safe application determines, according to the tag selected by the user, if the user wants to automatically log on a web page or an application;
when it is determined that the user wants to log on a web page, go to Step S82. When said password safe application determines, according to the tag selected by the user, that the user wants to automatically log on a web page, said password safe application controls to automatically open a browser and controls said browser to automatically go to the target web page that the user wants to log on;
it should be clear that prior to said step, the user needs to confirm a valid and useable network connection such that the mobile terminal can smoothly go to the target web page that the user wants to log on;
Step S83. Said password safe application acquires the user name and password corresponding to said target web page according to said logon list, and automatically fills said acquired user name and password into said target web page, thereby automatically logging on the target web page.

Namely, said password safe application automatically fills the user name and password acquired thereby into said target web page, thus achieving the automatic logon to the target web page;
when it is determined that the user wants to log on an application, go to Step S84. Said password safe application determines if the target application for automatic logon has been uninstalled;
if yes, said application has been uninstalled, and then go to Step S85. End;
if no, go to Step S86. Said password safe application automatically opens said target application, acquires the user name and password corresponding to said target application according to said logon list, and automatically fills said user name and password into said target application, thereby automatically logging on the target application.

With the above mobile terminal-based automatic logon processing method, said password safe may store multiple groups of user names and passwords for the same web page or the same application, such that different users can automatically log on the web page or the application without making frequent inputs; moreover, the use of said password safe application enables a user to automatically log on a web page or an application according to a self-set tag, thereby eliminating the step that the user opens a browser and opens an application and making it greatly convenient for the user; in addition, identity verification is required when a user uses said password safe application, which safeguards the user's privacy.

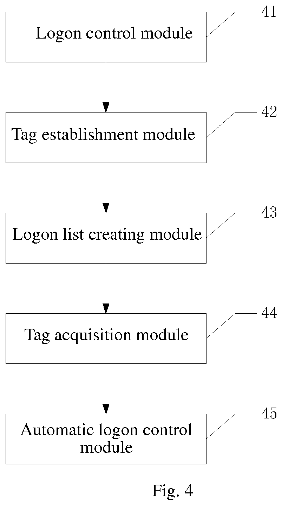

The present invention further provides a mobile terminal-based automatic logon system, see Fig.4 for the structural block diagram of said system, and Fig.4 is a functional block diagram of a preferred embodiment of a mobile terminal-based automatic logon system according to the present invention.

It can be seen from Fig.4 that said mobile terminal-based automatic logon system specifically comprises:
A logon control module 41 for that, when a user registers for the password safe application of the mobile terminal, the user needs to input a verification code, when the user logs on said password safe application, said password safe application determines if the verification code inputted by the user is consistent with the verification code inputted thereby during registration; if consistent, the logon is successful, and said password safe application detects if the user inputs a user name and password for logon to a web page or application.

A tag establishment module 42 for, when a mobile terminal detects that a user inputs a user name and password and successfully logs on a web page or application, said mobile terminal to prompt the user to input a tag, and then establish a corresponding relation between said tag and said user name and password, as well as a corresponding relation between said tag and said web page or application;
a logon list creating module 43 for creating a logon list in advance, and the logon list storing a plurality of user names and passwords stored on the mobile terminal and used to successfully log on web pages or applications, as well as tags corresponding to said user names and passwords, respectively, according to user operations;
a tag acquisition module 44 for, when a user needs to automatically log on a target web page or a target application, acquiring the tag corresponding to said target web page or said target application according to said logon list;
an automatic logon control module 45 for automatically opening the target web page or target application corresponding to said tag, acquiring the user name and password corresponding to said target web page or said target application according to said logon list, and automatically filling said user name and password into said target web page or said target application, thereby performing automatic logon to the target web page or the target application.

Wherein said tag establishment module 42 specifically comprises:
a control command determination unit 421 for, when said password safe application detects that a user inputs a user name and password for logon to a web page or application, determining if the user inputs a control command to record said user name and password;
a tag setup unit 422 for, when it is determined that the user inputs a control command to record said user name and password, said password safe application to receive a tag that the user sets for said password;
a logon determination unit 423 for automatically detecting if the logon to the web page or application is successful after the user inputs the user name and password; if the logon is successful, treating the tag set by the user as a valid tag;
a storing unit 424 for storing said tag and the user name and password corresponding to said tag;
and said tag acquisition module 44 specifically comprises:
   a logon list acquisition unit 441 for that, when the user successfully logs on said password safe application, the user may acquire said logon list;
   a tag acquisition unit 442 for acquiring and selecting the tag corresponding to said target web page or said target application according to said logon list.

Said automatic logon control module 45 specifically comprises:
A web page selection control unit 451 for that, when said password safe application determines, according to the tag selected by the user, that the user wants to automatically log on a web page, said password safe application controls to automatically open a browser and controls said browser to automatically go to the target web page that the user wants to log on;
a web page automatic logon unit 452 for acquiring the user name and password corresponding to said target web page according to said logon list, and automatically filling said acquired user name and password into said target web page, thereby automatically logging on the target web page;
an application selection control unit 453 for that, when said password safe application determines, according to the tag selected by the user, that the user wants to automatically log on an application, said password safe application determines if the target application for automatic logon has been uninstalled;
an application automatic logon unit 454 for that, when said password safe application determines that the target application for automatic logon has not been uninstalled, said password safe application automatically opens said target application, acquires the user name and password corresponding to said target application according to said logon list, and automatically fills said user name and password into said target application, thereby automatically logging on the target application.

In summary, with the mobile terminal-based automatic logon processing method and system according to the present invention, a user can correspond web pages and applications that are frequently accessed on a mobile terminal to user names and passwords, which takes place the storage of the user names and passwords by the applications and browser cache, improves the security of password storage, and avoids the risk of privacy leakage. Moreover, when the user needs to log on a web page or an application, the user can directly log on the web page or the application by selecting a tag corresponding to said web page or said application, which avoids inconvenience caused by repeated inputs of user names and passwords by the user. In addition, when different users use the mobile terminal, automatic logon can be performed just by setting a tag for the web page or application in advance, which makes it greatly convenient for the users.

It should be understood that applications of the present invention are not limited to the above examples. To those skilled in the art, improvements or modifications may be made according to the above description.

## Claims

1. A mobile terminal-based automatic logon processing method comprising the following steps:
A001. Installing a password safe application on a mobile terminal, and storing user names and passwords used by a user to successfully log on a web page or application with said application.
A. When the password safe application detects that a user inputs a user name and password, and successfully logs on a web page or application, the password safe application prompts the user to input a tag, and then establishes a corresponding relation between said tag and said user name and password, as well as a corresponding relation between said tag and said web page or application (S5);
B. Said password safe application creates a logon list in advance, and the logon list stores a plurality of user names and passwords used to successfully log on web pages or applications, as well as tags corresponding to said user names and passwords, respectively, according to user operations (S6);
C. When a user needs to automatically log on a target web page or a target application, acquiring the tag corresponding to said target web page or said target application according to said logon list (S7);
D. Said password safe application automatically opens the target web page or target application corresponding to said tag, acquires the user name and password corresponding to said target web page or said target application according to said logon list, and automatically fills said user name and password into said target web page or said target application, thereby performing automatic logon to the target web page or the target application (S8),
wherein Step C specifically comprises:
C11. When a user needs to automatically log on a target web page or a target application, the user needs to log on said password safe application;
C12. When the user successfully logs on said password safe application, the user may acquire said logon list;
C13. The user may acquire and select the tag corresponding to said target web page or said target application according to said logon list; and
wherein Step D comprises:
D11. When said password safe application determines, according to the tag selected by the user, that the user wants to automatically log on a web page (S81), said password safe application controls to automatically open a browser and controls said browser to automatically go to the target web page that the user wants to log on (S82);
D12. Said password safe application acquires the user name and password corresponding to said target web page according to said logon list, and automatically fills said acquired user name and password into said target web page, thereby automatically logging on the target web page (S83);
D21. When said password safe application determines, according to the tag selected by the user, that the user wants to automatically log on an application (S81), said password safe application determines if the target application for automatic logon has been uninstalled (S84); if no, go to Step D22; if yes, prompt the user that said target application does not exist (S85);
D22. Said password safe application automatically opens said target application, acquires the user name and password corresponding to said target application according to said logon list, and automatically fills said user name and password into said target application, thereby automatically logging on the target application (S86).

2. The mobile terminal-based automatic logon processing method according to claim 1 further comprising after said A001 and prior to Step A:
A002. During the first time use of said password safe application, carrying out registration (S1), filling in registration information (S2), and inputting a verification code.

3. The mobile terminal-based automatic logon processing method according to any of the preceding claims, comprising the following steps:
A01. When a user registers for the password safe application of the mobile terminal, the user needs to input a verification code;
A02. When the user logs on said password safe application, said password safe application determines if the verification code inputted by the user is consistent with the verification code inputted thereby during registration; if consistent, the logon is successful and go to Step A03; if not consistent, prompt the user to input again;
A03. Said password safe application detects if the user inputs a user name and password for logon to a web page or application.

4. The mobile terminal-based automatic logon processing method according to claim 3 further comprising prior to Step A01:
A001. Installing a password safe application on the mobile terminal, and storing user names and passwords used by a user to successfully log on a web page or application with said application.

5. The mobile terminal-based automatic logon processing method according to claim 4 further comprising after said A001 and prior to Step A01:
A002. During the first time use of said password safe application, carrying out registration, filling in registration information, and inputting a verification code.

6. The mobile terminal-based automatic logon processing method according to any of claims 3 to 5, wherein Step A specifically comprises:
A11. When said password safe application detects that a user inputs a user name and password for logon to a web page or application, determining if the user inputs a control command to record said user name and password (S51); if yes, go to Step A12; if no, do not record the user name and password that the user inputs this time (S52);
A12. Said password safe application receives a tag that the user sets for said password (S53);
A13. Said password safe application automatically detects if the logon to the web page or application is successful after the user inputs the user name and password (S54); if the logon is successful, treat the tag set by the user as a valid tag and go to Step A14; if the logon fails, return to Step A03;
A14. Said password safe application stores said tag and the user name and password corresponding to said tag (S55).

7. A mobile terminal-based automatic logon processing method according to any of the preceding claims, wherein the method is a mobile phone-based automatic logon processing method.

8. A mobile terminal-based automatic logon system comprising:
- A tag establishment module (42) for, when a mobile terminal detects that a user inputs a user name and password and successfully logs on a web page or application, said mobile terminal to prompt the user to input a tag, and then establish a corresponding relation between said tag and said user name and password, as well as a corresponding relation between said tag and said web page or application;
- a logon list creating module (43) for creating a logon list in advance, and the logon list storing a plurality of user names and passwords used to successfully log on web pages or applications, as well as tags corresponding to said user names and passwords, respectively, according to user operations;
- a tag acquisition module (44) for, when a user needs to automatically log on a target web page or a target application, acquiring the tag corresponding to said target web page or said target application according to said logon list;
- an automatic logon control module (45) for automatically opening the target web page or target application corresponding to said tag, acquiring the user name and password corresponding to said target web page or said target application according to said logon list, and automatically filling said user name and password into said target web page or said target application, thereby performing automatic logon to the target web page or the target application;
wherein said mobile terminal-based automatic logon system further comprises:
- a logon control module (41) for that, when a user registers for the password safe application of the mobile terminal, the user needs to input a verification code, when the user logs on said password safe application, said password safe application determines if the verification code inputted by the user is consistent with the verification code inputted thereby during registration; if consistent, the logon is successful, and said password safe application detects if the user inputs a user name and password for logon to a web page or application;
wherein said tag establishment module specifically comprises:
- a control command determination unit for, when said password safe application detects that a user inputs a user name and password for logon to a web page or application, determining if the user inputs a control command to record said user name and password;
- a tag setup unit for, when it is determined that the user inputs a control command to record said user name and password, said password safe application to receive a tag that the user sets for said password;
- a logon determination unit for automatically detecting if the logon to the web page or application is successful after the user inputs the user name and password; if the logon is successful, treating the tag set by the user as a valid tag;
- a storing unit for storing said tag and the user name and password corresponding to said tag;
- and said tag acquisition module specifically comprises:
- a logon list acquisition unit for that, when the user successfully logs on said password safe application, the user may acquire said logon list;
- a tag acquisition unit for acquiring and selecting the tag corresponding to said target web page or said target application according to said logon list; and
wherein said automatic logon control module specifically comprises:
- a web page selection control unit for that, when said password safe application determines, according to the tag selected by the user, that the user wants to automatically log on a web page, said password safe application controls to automatically open a browser and controls said browser to automatically go to the target web page that the user wants to log on;
- a web page automatic logon unit for acquiring the user name and password corresponding to said target web page according to said logon list, and automatically filling said acquired user name and password into said target web page, thereby automatically logging on the target web page;
- an application selection control unit for that, when said password safe application determines, according to the tag selected by the user, that the user wants to automatically log on an application, said password safe application determines if the target application for automatic logon has been uninstalled;
- an application automatic logon unit for that, when said password safe application determines that the target application for automatic logon has not been uninstalled, said password safe application automatically opens said target application, acquires the user name and password corresponding to said target application according to said logon list, and automatically fills said user name and password into said target application, thereby automatically logging on the target application.

9. The mobile terminal-based automatic logon system according to claim 8,
wherein the mobile terminal is a mobile phone.

## Patentansprüche

1. Verarbeitungsverfahren für mobilendgerätbasiertes automatisches Einloggen, das die folgenden Schritte umfasst:
A001. Installieren einer Passwort-Safe-Anwendung auf einem Mobilendgerät und Speichern von durch einen Benutzer zum erfolgreichen Einloggen bei einer Webseite oder Anwendung mit der Anwendung verwendeten Benutzernamen und Passwörtern;
A. Wenn die Passwort-Safe-Anwendung detektiert, dass ein Benutzer einen Benutzernamen und ein Passwort eingibt und sich erfolgreich bei einer Webseite oder einer Anwendung einloggt, fordert die Passwort-Safe-Anwendung den Benutzer dazu auf, einen Tag einzugeben, und stellt dann eine entsprechende Beziehung zwischen dem Tag und dem Benutzernamen und Passwort sowie eine entsprechende Beziehung zwischen dem Tag und der Webseite oder der Anwendung her (S5);
B. Die Passwort-Safe-Anwendung erzeugt im Voraus eine Login-Liste, und die Login-Liste speichert mehrere zum erfolgreichen Einloggen bei Webseiten oder Anwendungen verwendete Benutzernamen und Passwörter sowie den Benutzernamen bzw. Passwörtern entsprechende Tags gemäß Benutzeroperationen (S6);
C. Wenn sich ein Benutzer automatisch bei einer Zielwebseite oder einer Zielanwendung einloggen muss, Erfassen des der Zielwebseite oder der Zielanwendung entsprechenden Tags gemäß der Login-Liste (S7);
D. Die Passwort-Safe-Anwendung öffnet automatisch die dem Tag entsprechende Zielwebseite oder Zielanwendung, erfasst den Benutzernamen und das Passwort, die der Zielwebseite oder der Zielanwendung entsprechen, gemäß der Login-Liste und fügt den Benutzernamen und das Passwort automatisch in die Zielwebseite oder die Zielanwendung ein, wodurch ein automatisches Einloggen bei der Zielwebseite oder der Zielanwendung durchgeführt wird (S8),
wobei Schritt C insbesondere Folgendes umfasst:
C11. Wenn sich ein Benutzer automatisch bei einer Zielwebseite oder einer Zielanwendung einloggen muss, muss sich der Benutzer bei der Passwort-Safe-Anwendung einloggen;
C12. Wenn sich der Benutzer erfolgreich bei der Passwort-Safe-Anwendung einloggt, kann der Benutzer die Login-Liste erfassen;
C13. Der Benutzer kann den der Zielwebseite oder der Zielanwendung entsprechenden Tag gemäß der Login-Liste erfassen und auswählen; und
wobei Schritt D Folgendes umfasst:
D11. Wenn die Passwort-Safe-Anwendung gemäß dem durch den Benutzer ausgewählten Tag bestimmt, dass sich der Benutzer automatisch bei einer Webseite einloggen möchte (S81), führt die Passwort-Safe-Anwendung eine Steuerung zum automatischen Öffnen eines Browsers durch und steuert den Browser dahingehend, automatisch zu der Zielwebseite zu gehen, bei der sich der Benutzer einloggen möchte (S82);
D12. Die Passwort-Safe-Anwendung erfasst den Benutzernamen und das Passwort, die der Zielwebseite entsprechen, gemäß der Login-Liste und fügt den erfassten Benutzernamen und das erfasste Passwort automatisch in die Zielwebseite ein, wodurch ein automatisches Einloggen bei der Zielwebseite durchgeführt wird (S83);
D21. Wenn die Passwort-Safe-Anwendung gemäß dem durch den Benutzer ausgewählten Tag bestimmt, dass sich der Benutzer automatisch bei einer Anwendung einloggen möchte (S81), bestimmt die Passwort-Safe-Anwendung, ob die Zielanwendung für automatisches Einloggen deinstalliert worden ist (S84); falls nein, ist mit Schritt D22 fortzufahren; falls ja, ist der Benutzer zu benachrichtigen, dass die Zielanwendung nicht existiert (S85);
D22. Die Passwort-Safe-Anwendung öffnet die Zielanwendung automatisch, erfasst den Benutzernamen und das Passwort, die der Zielanwendung entsprechen, gemäß der Login-Liste und fügt den Benutzernamen und das Passwort automatisch in die Zielanwendung ein, wodurch ein automatisches Einloggen bei der Zielanwendung durchgeführt wird (S86).

2. Verarbeitungsverfahren für mobilendgerätbasiertes automatisches Einloggen nach Anspruch 1, das nach Schritt A001 und vor Schritt A ferner Folgendes umfasst:
A002. Während der erstmaligen Verwendung der Passwort-Safe-Anwendung, Ausführen einer Registrierung (S1), Einfügen von Registrierungsinformationen (S2) und Eingeben eines Verifikationscodes.

3. Verarbeitungsverfahren für mobilendgerätbasiertes automatisches Einloggen nach einem der vorhergehenden Ansprüche, das die folgenden Schritte umfasst:
A01. Wenn sich ein Benutzer für die Passwort-Safe-Anwendung des Mobilendgeräts registriert, muss der Benutzer einen Verifikationscode eingeben;
A02. Wenn sich der Benutzer bei der Passwort-Safe-Anwendung einloggt, bestimmt die Passwort-Safe-Anwendung, ob der durch den Benutzer eingegebene Verifikationscode mit dem dadurch während der Registrierung eingegebenen Verifikationscode übereinstimmt; falls übereinstimmend, ist der Login erfolgreich und es ist mit Schritt A03 fortzufahren; falls nicht übereinstimmend, ist der Benutzer zur erneuten Eingabe aufzufordern;
A03. Die Passwort-Safe-Anwendung detektiert, ob der Benutzer einen Benutzernamen und ein Passwort zum Einloggen bei einer Webseite oder einer Anwendung eingibt.

4. Verarbeitungsverfahren für mobilendgerätbasiertes automatisches Einloggen nach Anspruch 3, das vor Schritt A01 ferner Folgendes umfasst:
A001. Installieren einer Passwort-Safe-Anwendung auf dem Mobilendgerät und Speichern von durch einen Benutzer zum erfolgreichen Einloggen bei einer Webseite oder einer Anwendung mit der Anwendung verwendeten Benutzernamen und Passwörtern.

5. Verarbeitungsverfahren für mobilendgerätbasiertes automatisches Einloggen nach Anspruch 4, das nach Schritt A001 und vor Schritt A01 ferner Folgendes umfasst:
A002. Während der erstmaligen Verwendung der Passwort-Safe-Anwendung, Ausführen einer Registrierung, Einfügen von Registrierungsinformationen und Eingeben eines Verifikations codes.

6. Verarbeitungsverfahren für mobilendgerätbasiertes automatisches Einloggen nach einem der Ansprüche 3 bis 5, wobei Schritt A insbesondere Folgendes umfasst:
A11. Wenn die Passwort-Safe-Anwendung detektiert, dass ein Benutzer einen Benutzernamen und ein Passwort zum Einloggen bei einer Webseite oder einer Anwendung eingibt, Bestimmen, ob der Benutzer einen Steuerbefehl zum Aufzeichnen des Benutzernamens und des Passworts eingibt (S51); falls ja, ist mit Schritt A12 fortzufahren; falls nein, sind der Benutzername und das Passwort, die der Benutzer bei diesem Mal eingibt, nicht aufzuzeichnen (S52);
A12. Die Passwort-Safe-Anwendung empfängt einen Tag, den der Benutzer für das Passwort setzt (S53) ;
A13. Die Passwort-Safe-Anwendung detektiert automatisch, ob der Login bei der Webseite oder der Anwendung erfolgreich ist, nachdem der Benutzer den Benutzernamen und das Passwort eingibt (S54); falls der Login erfolgreich ist, ist der durch den Benutzer gesetzte Tag als gültiges Tag zu behandeln und mit Schritt A14 fortzufahren; falls der Login fehlschlägt, ist zu Schritt A03 zurückzukehren;
A14. Die Passwort-Safe-Anwendung speichert den Tag und den Benutzernamen und das Passwort, die dem Tag entsprechen (S55).

7. Verarbeitungsverfahren für mobilendgerätbasiertes automatisches Einloggen nach einem der vorhergehenden Ansprüche, wobei es sich bei dem Verfahren um ein Verarbeitungsverfahren für mobiltelefonbasiertes automatisches Einloggen handelt.

8. System für mobilendgerätbasiertes automatisches Einloggen, das Folgendes umfasst:
- ein Tag-Erstellungsmodul (42) zum, wenn ein Mobilendgerät detektiert, dass ein Benutzer einen Benutzernamen und ein Passwort eingibt und sich erfolgreich bei einer Webseite oder einer Anwendung einloggt, durch das Mobilendgerät, Auffordern des Benutzers, ein Tag einzugeben, und dann Herstellen einer entsprechenden Beziehung zwischen dem Tag und dem Benutzernamen und Passwort sowie einer entsprechenden Beziehung zwischen dem Tag und der Webseite oder Anwendung;
- ein Login-Liste-Erzeugungsmodul (43) zum Erzeugen einer Login-Liste im Voraus, und wobei die Login-Liste mehrere Benutzernamen und Passwörter, die zum erfolgreichen Einloggen bei Webseiten oder Anwendungen verwendet wurden, sowie den Benutzernamen bzw. Passwörtern entsprechende Tags gemäß Benutzeroperationen speichert;
- ein Tag-Erfassungsmodul (44) zum, wenn sich ein Benutzer automatisch bei einer Zielwebseite oder einer Zielanwendung einloggen muss, Erfassen des der Zielwebseite oder der Zielanwendung entsprechenden Tags gemäß der Login-Liste;
- ein Automatisches-Einloggen-Steuermodul (45) zum automatischen Öffnen der Zielwebseite oder der Zielanwendung, die dem Tag entspricht, Erfassen des Benutzernamens und des Passworts, die der Zielwebseite oder der Zielanwendung entsprechen, gemäß der Login-Liste und automatisches Einfügen des Benutzernamens und des Passworts in die Zielwebseite oder die Zielanwendung, wodurch ein automatisches Einloggen bei der Zielwebseite oder der Zielanwendung durchgeführt wird;
wobei das System für mobilendgerätbasiertes automatisches Einloggen ferner Folgendes umfasst:
- ein Login-Steuermodul (41) dafür, dass, wenn sich ein Benutzer für die Passwort-Safe-Anwendung des Mobilendgeräts registriert, der Benutzer einen Verifikationscode eingeben muss, wenn sich der Benutzer bei der Passwort-Safe-Anwendung einloggt, die Passwort-Safe-Anwendung bestimmt, ob der durch den Benutzer eingegebene Verifikationscode mit dem dadurch während der Registrierung eingegebenen Verifikationscode übereinstimmt; falls übereinstimmend, ist der Login erfolgreich und die Passwort-Safe-Anwendung detektiert, ob der Benutzer einen Benutzernamen und ein Passwort zum Einloggen bei einer Webseite oder einer Anwendung eingibt;
wobei das Tag-Erstellungsmodul insbesondere Folgendes umfasst:
- eine Steuerbefehlbestimmungseinheit zum, wenn die Passwort-Safe-Anwendung detektiert, dass ein Benutzer einen Benutzernamen und ein Passwort zum Einloggen bei einer Webseite oder einer Anwendung eingibt, Bestimmen, ob der Benutzer einen Steuerbefehl zum Aufzeichnen des Benutzernamens und des Passworts eingibt;
- eine Tag-Setup-Einheit zum, wenn bestimmt wird, dass der Benutzer einen Steuerbefehl zum Aufzeichnen des Benutzernamens und des Passworts eingibt, durch die Passwort-Safe-Anwendung, Empfangen eines Tags, den der Benutzer für das Passwort setzt;
- eine Login-Bestimmungseinheit zum automatischen Detektieren, ob der Login bei der Webseite oder der Anwendung erfolgreich ist, nachdem der Benutzer den Benutzernamen und das Passwort eingibt; falls der Login erfolgreich ist, Behandeln des durch den Benutzer gesetzten Tags als einen gültigen Tag;
- eine Speichereinheit zum Speichern des Tags und des Benutzernamens und Passworts, die dem Tag entsprechen;
- und wobei das Tag-Erfassungsmodul insbesondere Folgendes umfasst:
- eine Login-Liste-Erfassungseinheit dafür, dass, wenn sich der Benutzer erfolgreich bei der Passwort-Safe-Anwendung anmeldet, der Benutzer die Login-Liste erfassen kann;
- eine Tag-Erfassungseinheit zum Erfassen und Auswählen des der Zielwebseite oder der Zielanwendung entsprechenden Tags gemäß der Login-Liste; und
wobei das Automatisches-Einloggen-Steuermodul insbesondere Folgendes umfasst:
- eine Webseitenauswahlsteuereinheit dafür, dass, wenn die Passwort-Safe-Anwendung gemäß dem durch den Benutzer ausgewählten Tag bestimmt, dass sich der Benutzer automatisch bei einer Webseite anmelden möchte, die Passwort-Safe-Anwendung eine Steuerung zum automatischen Öffnen eines Browsers durchführt und den Browser dahingehend steuert, automatisch zu der Zielwebseite zu gehen, bei der sich der Benutzer anmelden möchte;
- eine Automatisches-Webseiteneinloggen-Einheit zum Erfassen des Benutzernamens und des Passworts, die der Zielwebseite entsprechen, gemäß der Login-Liste, und zum automatischen Einfügen des erfassten Benutzernamens und des erfassten Passworts in die Zielwebseite, wodurch ein automatisches Einloggen bei der Zielwebseite durchgeführt wird;
- eine Anwendungsauswahlsteuereinheit dafür, dass, wenn die Passwort-Safe-Anwendung gemäß dem durch den Benutzer ausgewählten Tag bestimmt, dass sich der Benutzer automatisch bei einer Anwendung einloggen möchte, die Passwort-Safe-Anwendung bestimmt, ob die Zielanwendung für automatisches Einloggen deinstalliert worden ist;
- eine Automatisches-Anwendungseinloggen-Einheit dafür, dass, wenn die Passwort-Safe-Anwendung bestimmt, dass die Zielanwendung für automatisches Einloggen nicht deinstalliert worden ist, die Passwort-Safe-Anwendung die Zielanwendung automatisch öffnet, den Benutzernamen und das Passwort, die der Zielanwendung entsprechen, gemäß der Anmeldungsliste erfasst und den Benutzernamen und das Passwort automatisch in die Zielanwendung einfügt, wodurch ein automatisches Einloggen bei der Zielanwendung durchgeführt wird.

9. System für mobilendgerätbasiertes automatisches Einloggen nach Anspruch 8, wobei es sich bei dem Mobilendgerät um ein Mobiltelefon handelt.

## Revendications

1. Procédé de traitement de connexion automatique basé sur un terminal mobile, comprenant les étapes suivantes :
A001. Installation d'une application de sécurisation de mots de passe sur un terminal mobile, et stockage de noms d'utilisateur et de mots de passe, utilisés par un utilisateur pour se connecter avec succès sur une page Web ou une application, à l'aide de ladite application ;
A. Lorsque l'application de sécurisation de mots de passe détecte qu'un utilisateur entre un nom d'utilisateur et un mot de passe et se connecte avec succès sur une page Web ou une application, l'application de sécurisation de mots de passe invite l'utilisateur à entrer une étiquette puis établit une relation de correspondance entre ladite étiquette et lesdits nom d'utilisateur et mot de passe, ainsi qu'une relation de correspondance entre ladite étiquette et ladite page Web ou ladite application (S5) ;
B. Ladite application de sécurisation de mots de passe crée à l'avance une liste de connexions, et la liste de connexions stocke une pluralité de noms d'utilisateur et de mots de passe utilisés pour se connecter avec succès sur des pages Web ou des applications, ainsi que des étiquettes correspondant auxdits noms d'utilisateur et mots de passe, respectivement, selon des opérations d'utilisateur (S6) ;
C. Lorsqu'un utilisateur a besoin de se connecter automatiquement sur une page Web cible ou une application cible, acquisition de l'étiquette correspondant à ladite page Web cible ou ladite application cible selon ladite liste de connexions (S7);
D. Ladite application de sécurisation de mots de passe ouvre automatiquement la page Web cible ou l'application cible correspondant à ladite étiquette, acquiert le nom d'utilisateur et le mot de passe correspondant à ladite page Web cible ou ladite application cible selon ladite liste de connexions, et renseigne automatiquement lesdits nom d'utilisateur et mot de passe dans ladite page Web cible ou ladite application cible, en réalisant ainsi une connexion automatique à la page Web cible ou l'application cible (S8),
l'Étape C comprenant plus particulièrement :
C11. Lorsqu'un utilisateur a besoin de se connecter automatiquement sur une page Web cible ou une application cible, l'utilisateur a besoin de se connecter sur ladite application de sécurisation de mots de passe ;
C12. Lorsque l'utilisateur se connecte avec succès sur ladite application de sécurisation de mots de passe, l'utilisateur a la permission d'acquérir ladite liste de connexions ;
C13. L'utilisateur a la permission d'acquérir et de sélectionner l'étiquette correspondant à ladite page Web cible ou ladite application cible selon ladite liste de connexions ; et
l'Étape D comprenant :
D11. Lorsque ladite application de sécurisation de mots de passe détermine, selon l'étiquette sélectionnée par l'utilisateur, que l'utilisateur souhaite se connecter automatiquement sur une page Web (S81), ladite application de sécurisation de mots de passe commande l'ouverture automatique d'un navigateur et commande audit navigateur de se rendre automatiquement sur la page Web cible sur laquelle l'utilisateur souhaite se connecter (S82) ;
D12. Ladite application de sécurisation de mots de passe acquiert le nom d'utilisateur et le mot de passe correspondant à ladite page Web cible selon ladite liste de connexions, et renseigne automatiquement lesdits nom d'utilisateur et mot de passe acquis dans ladite page Web cible, en réalisant ainsi une connexion automatique sur la page Web cible (S83) ;
D21. Lorsque ladite application de sécurisation de mots de passe détermine, selon l'étiquette sélectionnée par l'utilisateur, que l'utilisateur souhaite se connecter automatiquement sur une application (S81), ladite application de sécurisation de mots de passe détermine si l'application cible pour une connexion automatique a été désinstallée (S84) ; si non, passer à l'Étape D22 ; si oui, notifier l'utilisateur que ladite application cible n'existe pas (S85) ;
D22. Ladite application de sécurisation de mots de passe ouvre automatiquement ladite application cible, acquiert le nom d'utilisateur et le mot de passe correspondant à ladite application cible selon ladite liste de connexions, et renseigne automatiquement lesdits nom d'utilisateur et mot de passe dans ladite application cible, en réalisant ainsi une connexion automatique sur l'application cible (S86).

2. Procédé de traitement de connexion automatique basé sur un terminal mobile selon la revendication 1, comprenant en outre, suite à ladite A001 et préalablement à l'Étape A :
A002. Lors de l'utilisation pour la première fois de ladite application de sécurisation de mots de passe, réalisation d'une inscription (S1), renseignement d'informations d'inscription (S2) et entrée d'un code de vérification.

3. Procédé de traitement de connexion automatique basé sur un terminal mobile selon l'une quelconque des revendications précédentes, comprenant les étapes suivantes :
A01. Lorsqu'un utilisateur s'inscrit pour ladite application de sécurisation de mots de passe du terminal mobile, l'utilisateur a besoin d'entrer un code de vérification ;
A02. Lorsque l'utilisateur se connecte sur ladite application de sécurisation de mots de passe, ladite application de sécurisation de mots de passe détermine si le code de vérification entré par l'utilisateur est conforme au code de vérification qu'il a entré au cours de l'inscription ; s'il est conforme, la connexion est un succès et passer à l'Étape A03 ; s'il n'est pas conforme, inviter l'utilisateur à l'entrer une nouvelle fois ;
A03. Ladite application de sécurisation de mots de passe détecte si l'utilisateur entre un nom d'utilisateur et un mot de passe pour se connecter à une page Web ou une application.

4. Procédé de traitement de connexion automatique basé sur un terminal mobile selon la revendication 3, comprenant en outre, préalablement à l'Étape A01 :
A001. Installation d'une application de sécurisation de mots de passe sur le terminal mobile, et stockage de noms d'utilisateur et de mots de passe, utilisés par un utilisateur pour se connecter avec succès sur une page Web ou une application, à l'aide de ladite application.

5. Procédé de traitement de connexion automatique basé sur un terminal mobile selon la revendication 4, comprenant en outre, suite à ladite A001 et préalablement à l'Étape A01 :
A002. Lors de l'utilisation pour la première fois de ladite application de sécurisation de mots de passe, réalisation d'une inscription, renseignement d'informations d'inscription et entrée d'un code de vérification.

6. Procédé de traitement de connexion automatique basé sur un terminal mobile selon l'une quelconque des revendications 3 à 5, dans lequel l'Étape A comprend plus particulièrement :
A11. Lorsque ladite application de sécurisation de mots de passe détecte qu'un utilisateur entre un nom d'utilisateur et un mot de passe pour se connecter à une page Web ou une application, détermination si l'utilisateur entre une instruction de commande d'enregistrement desdits nom d'utilisateur et mot de passe (S51) ; si oui, passer à l'Étape A12 ; si non, ne pas enregistrer les nom d'utilisateur et mot de passe entrés cette fois par l'utilisateur (S52) ;
A12. Ladite application de sécurisation de mots de passe reçoit une étiquette définie par l'utilisateur pour ledit mot de passe (S53) ;
A13. Ladite application de sécurisation de mots de passe détecte si la connexion à la page Web ou l'application est un succès après que l'utilisateur a entré le nom d'utilisateur et le mot de passe (S54) ; en cas de succès de la connexion, considérer l'étiquette définie par l'utilisateur comme une étiquette valide et passer à l'Étape A14; en cas d'échec de la connexion, retourner à l'Étape A03 ;
A14. Ladite application de sécurisation de mots de passe stocke ladite étiquette et le nom d'utilisateur et le mot de passe correspondant à ladite étiquette (S55).

7. Procédé de traitement de connexion automatique basé sur un terminal mobile selon l'une quelconque des revendications précédentes, lequel procédé est un procédé de traitement de connexion automatique basé sur un téléphone mobile.

8. Système de connexion automatique basé sur un terminal mobile, comprenant :
- un module d'établissement d'étiquette (42) destiné, lorsqu'un terminal mobile détecte qu'un utilisateur entre un nom d'utilisateur et un mot de passe et se connecte avec succès sur une page Web ou une application, à amener ledit terminal mobile à inviter l'utilisateur à entrer une étiquette puis à établir une relation de correspondance entre ladite étiquette et lesdits nom d'utilisateur et mot de passe, ainsi qu'une relation de correspondance entre ladite étiquette et ladite page Web ou ladite application ;
- un module de création de liste de connexions (43) destiné à créer à l'avance une liste de connexions, et la liste de connexions stockant une pluralité de noms d'utilisateur et de mots de passe utilisés pour se connecter avec succès sur des pages Web ou des applications, ainsi que des étiquettes correspondant auxdits noms d'utilisateur et mots de passe, respectivement, selon des opérations d'utilisateur ;
- un module d'acquisition d"étiquette (44) destiné, lorsqu'un utilisateur a besoin de se connecter automatiquement sur une page Web cible ou une application cible, à acquérir l'étiquette correspondant à ladite page Web cible ou ladite application cible selon ladite liste de connexions ;
- un module de commande de connexion automatique (45) destiné à ouvrir automatiquement la page Web cible ou l'application cible correspondant à ladite étiquette, acquérir le nom d'utilisateur et le mot de passe correspondant à ladite page Web cible ou ladite application cible selon ladite liste de connexions, et renseigner automatiquement lesdits nom d'utilisateur et mot de passe dans ladite page Web cible ou ladite application cible, en réalisant ainsi une connexion automatique à la page Web cible ou l'application cible ;
ledit système de connexion automatique basé sur un terminal mobile comprenant en outre :
- un module de commande de connexion (41) destiné à assurer que, lorsqu'un utilisateur s'inscrit pour l'application de sécurisation de mots de passe du terminal mobile, l'utilisateur a besoin d'entrer un code de vérification, lorsque l'utilisateur se connecte sur l'application de sécurisation de mots de passe, ladite application de sécurisation de mots de passe détermine si le code de vérification entré par l'utilisateur est conforme au code de vérification qu'il a entré au cours de l'inscription ; s'il est conforme, la connexion est un succès et ladite application de sécurisation de mots de passe détecte si l'utilisateur entre un nom d'utilisateur et un mot de passe pour se connecter à une page Web ou une application ;
ledit module d'établissement d'étiquette comprenant plus particulièrement :
- une unité de détermination d'instruction de commande destinée, lorsque ladite application de sécurisation de mots de passe détecte qu'un utilisateur entre un nom d'utilisateur et un mot de passe pour se connecter à une page Web ou une application, à déterminer si l'utilisateur entre une instruction de commande d'enregistrement desdits nom d'utilisateur et mot de passe ;
- une unité de définition d'étiquette destinée, s'il est déterminé que l'utilisateur entre une instruction de commande d'enregistrement desdits nom d'utilisateur et mot de passe, à amener ladite application de sécurisation de mots de passe à recevoir une étiquette définie par l'utilisateur pour ledit mot de passe ;
- une unité de détermination de connexion destinée à détecter automatiquement si la connexion à la page Web ou l'application est un succès après que l'utilisateur a entré le nom d'utilisateur et le mot de passe ; en cas de succès de la connexion, considérer l'étiquette définie par l'utilisateur comme une étiquette valide ;
- une unité de stockage destinée à stocker ladite étiquette et le nom d'utilisateur et le mot de passe correspondant à ladite étiquette ;
- et ledit module d'acquisition d'étiquette comprenant plus particulièrement :
- une unité d'acquisition de liste de connexions destinée à assurer que, lorsque l'utilisateur se connecte avec succès sur ladite application de sécurisation de mots de passe, l'utilisateur a la permission d'acquérir ladite liste de connexions ;
- une unité d'acquisition d'étiquette destinée à acquérir et sélectionner l'étiquette correspondant à ladite page Web cible ou ladite application cible selon ladite liste de connexions ; et
ledit module de commande de connexion automatique comprenant plus particulièrement :
- une unité de commande de sélection de page Web destinée à assurer que, lorsque ladite application de sécurisation de mots de passe détermine, selon l'étiquette sélectionnée par l'utilisateur, que l'utilisateur souhaite se connecter automatiquement sur une page Web, ladite application de sécurisation de mots de passe commande l'ouverture automatique d'un navigateur et commande audit navigateur de se rendre automatiquement sur la page Web cible sur laquelle l'utilisateur souhaite se connecter ;
- une unité de connexion automatique sur page Web destinée à acquérir le nom d'utilisateur et le mot de passe correspondant à ladite page Web cible selon ladite liste de connexions, et à renseigner automatiquement lesdits nom d'utilisateur et mot de passe acquis dans ladite page Web cible, en réalisant ainsi une connexion automatique sur la page Web cible ;
- une unité de commande de sélection d'application destinée à assurer que, lorsque ladite application de sécurisation de mots de passe détermine, selon l'étiquette sélectionnée par l'utilisateur, que l'utilisateur souhaite se connecter automatiquement sur une application, ladite application de sécurisation de mots de passe détermine si l'application cible pour une connexion automatique a été désinstallée ;
- une unité de connexion automatique sur application destinée à assurer que, lorsque ladite application de sécurisation de mots de passe détermine que l'application cible pour une connexion automatique n'a pas été désinstallée, ladite application de sécurisation de mots de passe ouvre automatiquement ladite application cible, acquiert le nom d'utilisateur et le mot de passe correspondant à ladite application cible selon ladite liste de connexions, et renseigne automatiquement lesdits nom d'utilisateur et mot de passe dans ladite application cible, en réalisant ainsi une connexion automatique sur l'application cible.

9. Système de connexion automatique basé sur un terminal mobile selon la revendication 8, dans lequel le terminal mobile est un téléphone mobile.
